(19) Europäisches Patentamt
European Patent Office
Office européen des brevets

(11) **EP 4 280 123 A1**

(12) **EUROPEAN PATENT APPLICATION**

(43) Date of publication:
**22.11.2023 Bulletin 2023/47**

(21) Application number: **22174638.1**

(22) Date of filing: **20.05.2022**

(51) International Patent Classification (IPC):
**G06N 7/00** (2023.01)    **G06N 20/10** (2019.01)
**B60W 30/00** (2006.01)

(52) Cooperative Patent Classification (CPC):
**G06N 20/10; B60W 30/00; G06N 7/01**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **TOYOTA JIDOSHA KABUSHIKI KAISHA**
**Toyota-shi, Aichi-ken, 471-8571 (JP)**

(72) Inventors:
• **LAZCANO, Andrea Michelle**
  **1140 BRUSSELS (BE)**
• **AKUTAIN, Xabier Carrera**
  **1140 BRUSSELS (BE)**

(74) Representative: **Cabinet Beau de Loménie**
**158, rue de l'Université**
**75340 Paris Cedex 07 (FR)**

(54) **DRIVING VARIABLE CALCULATION METHOD AND SYSTEM, INPUT FEATURES COMBINATION SELECTION METHOD, NUMBER OF STATES DETERMINATION METHOD, PROGRAM, STORAGE MEDIUM AND SYSTEM**

(57)    A driving variable calculation method for calculating a driving variable ($T^{est}_{d,t}$) related to a state of a driver-vehicle system during driving at a next time step (t+1);

a hidden Markov Model (HMM) being defined by a number of states ($s_k$), state transition probabilities and state emission distributions ($b_k$);

each state emission distribution ($b_k$) being a probability distribution for the driver-vehicle system of being in a state ($s_k$) and having a current combined observation vector ($x_t$) combining current values of input features (F) and said at least one driving variable ($T^d_t$);

the method comprising steps of:

S10) inputting current values of input features (F);

S20) based on said vector, calculating said at least one driving variable ($T_d$) at said next time step (t+1) based on the hidden Markov Model (HMM).

The invention further encompasses a system, a program, a data storage medium, adapted to perform the driving variable calculation method.

FIG.1

**Description**

FIELD OF THE DISCLOSURE

The present disclosure concerns methods and systems for calculating the value(s), at future time step(s), of driving variable related to a state of a driver-vehicle system (the system comprising the driver and the vehicle). A driving variable can be for instance the torque applied by a driver of a vehicle to the steering wheel.

BACKGROUND OF THE DISCLOSURE

Since a driver-vehicle system is a complex system whose state, position, etc., changes constantly during driving, it is necessary in many occasions, or at least useful, to be able to predict the value of one or more driving variables at a future time step. Having an estimated value of such future value(s) is indeed very useful to perform various control tasks, in particular driving tasks, aboard the vehicle.

A method to calculate a value of the steering wheel angle of a vehicle based on a Hidden Markow model has been proposed by Ref.[1] cited in the references list below.

However, this method is limited to the calculation of the steering wheel angle.

Accordingly, there is a need for methods and systems to calculate such value(s) of one or more driving variables at a future time step, for driving variables other than the steering wheel angle.

The references below disclose systems and methods that have been developed either for driving assistance, or about discriminative and/or generative models (such models are defined for instance in Ref.[5] cited below).

References:

[1] S. Lefèvre, Y. Gao, D. Vasquez, H. Tseng, R. Bajcsy, and F. Borrelli, "Lane Keeping Assistance with Learning-Based Driver Model and Model Predictive Control", 12th International Symposium on Advanced Vehicle Control, (Tokyo, Japan), 2014.

[2] Zhongyi Hu, Yukun Bao, Tao Xiong, Raymond Chiong, "Hybrid filter-wrapper feature selection for short-term load forecasting", Engineering Applications of Artificial Intelligence, Volume 40, 2015, Pages 17-27, ISSN 0952-1976.

[3] L. Rabiner, "A tutorial on hidden markov models and selected applications in speech recognition", Proceedings of the IEEE, vol. 77, no. 2, pp. 257-286, 1989.

[4] A. Dempster, N. Laird, and D. Rubin, "Maximum Likelihood from Incomplete Data Via the EM Algorithm", Journal of the Royal Statistical Society: Series B (Methodological) 39.1 (1977), pp. 1-22.

[5] Y. Tian, L. Sigal, H. Badino, F. de la Torre, and Y. Liu, "Latent Gaussian Mixture Regression for Human Pose Estimation", Computer Vision - ACCV 2010. Berlin, Heidelberg: Springer Berlin Heidelberg, 2011, pp. 679-690. isbn: 978-3-642-19318-7.

[6] S.Calinon, F. D'halluin, E. Sauser, D. Caldwell, and A. Billard, "Learning and reproduction of gestures by imitation", IEEE Robotics Automation Magazine, vol. 17, no. 2, pp. 44-54, 2010.

[7] F. Faller, "Utilization of a hidden-markov-model for the prediction of lane change maneuvers", PhD thesis, Master's thesis, TU Darmstadt, Knowledge Engineering Group, 2016.

[8] M. Liwicki and H. Bunke, "Feature selection for hmm and blstm based handwriting recognition of whiteboard notes" International Journal of Pattern Recognition and Artificial Intelligence, vol. 23, no. 05, pp. 907-923, 2009.

[9] A. Jovic, K. Brkic, and N. Bogunovic, "A review of feature selection methods with applications", 2015 38th International Convention on Information and Communication Technology, Electronics and Microelectronics (MIPRO), pp. 1200-1205, 2015.

[10] Z. Ghahramani and M.I. Jordan, "Supervised learning from incomplete data via an EM approach", Advances in neural information processing systems. 1994, pp. 120-127.

DISCLOSURE OF THE INVENTION

Accordingly, a first objective of the present disclosure is to propose a driving variable calculation method for predicting at least one driving variable related to a state of a driver-vehicle system during driving at a next time step, which can be implemented in real-time at inference time, which does not require a large number of variables as an input, and which outputs the predicted values of the driving variable with a good or high level of accuracy.

In this purpose, in a first aspect of the present disclosure, the following method is proposed.

This method is a computer-implemented driving variable calculation method for predicting at least one driving variable related to a state of a driver-vehicle system during driving at a next time step; said at least one driving variable not being the steering wheel angle; wherein,

a hidden Markov Model (HMM) being defined by a number K of states, a matrix of state transition probabilities and a set of K state emission distributions;

each coefficient of the state transition probabilities matrix defining a probability for a driver-vehicle system of transitioning from a first state at a previous time step to a second state at a current time step;

each state emission distribution being a probability distribution for the driver-vehicle system of being in a state and having a combined observation vector at a current time step, the combined observation vector combining values of input features characterizing a situation of the vehicle at said current time step and said at least one driving variable at said current time step;

the method comprises the steps of:

S10) inputting a vector of values of the input features at the current time point; and

S20) based on said vector, calculating said at least one driving variable at said next time step as being equal to an expectation of a probability to obtain a certain value of said at least one driving variable being given that the input features have said vector of values, said probability being calculated based on the hidden Markov Model.

In the proposed method, the driving variable related to a state of a driver-vehicle system during driving may be any time-dependent variable whose value depends on the evolution of the driver-vehicle system. The driving variable can be for instance the steering wheel angle, etc.

Specifically, the driving variable can be a variable measuring an action performed by the driver of the vehicle, for instance, the driver torque, which is the torque applied to the steering wheel of a vehicle by the driver of the vehicle.

Advantageously, it is possible with the above-proposed method to calculate the value at a future time step of one or more driving variables related to a state of the driver-vehicle system at a next time step, other than the steering wheel angle. As it will be explained below, these values can be calculated with a good accuracy. It is also possible to implement these methods so as to calculate the values of these variables not only with accuracy, but also taking into account one or more constraints related to the variations of these variables, such as a constraint of smoothness (progressivity of variations over time).

It has appeared that the proposed method makes it possible to calculate driving variables which are not directly linked to position of the vehicle on the road or its derivatives over time, such as the steering wheel angle. In particular, it has appeared that the method can even be used to driving variables describing the actions of the driver on the driving controls, that is, the driver torque applied to the steering wheel, the pressure applied to the accelerator pedal and the pressure applied to the brake pedal. Contrary to the steering wheel angle, such variables, in particular the drive torque, are not directly linked to the position of the vehicle on the road or its derivatives over time. Such variables have a highly nonlinear relationship with the main variables defining the situation of a vehicle on the road and further depend on the driver's behaviour, which is always complex to define.

In addition, the proposed method has high adaptive capabilities, and in particular efficiently captures the intra- and inter-driver variability: The method can be used to calculate driving variables even when the vehicle is driven by a variety of drivers, for instance from novice to expert drivers.

Finally, the proposed method advantageously can be implemented as a real-time method.

In the present document:

-   When a noun is written followed by '(s)', it means that the considered object or item can be in the singular or plural form. For instance, the expression 'object(s)' means 'at least one object'. Accordingly, a sentence like 'Object(s) are present' includes the singular form, that is, it encompasses the case where a single object is present.

-   a function or variable 'based on a value' or 'calculated from a value' means that at least said value is used to calculate the variable or the output of the function (the variable or the output of the function is often also a function of other values).

-   a Hidden Markov model is denoted interchangeably Hidden Markov model' or 'HMM'. HMMs refers to a plurality of Hidden Markov models, and HMM(s) refers to one or more Hidden Markov model.

-   Training an HMM' means identifying the main parameters of the HMM, that is, identifying at least the state transition distributions and the state emission distribution defining the HMM.

The proposed method can be implemented in many different ways in order to obtain various levels of performance.

In some embodiments, for each state, the state emission distribution is supposed to be a single multivariate Gaussian;

at step S20, said at least one driving variable is calculated as a weighted sum over the states of the mean values $\overline{\mu}_{t,k}$ of the state emission distribution for the respective states at the considered time step multiplied by respective time- and state-dependent mixture weights.

In some embodiments, each mean value $\overline{\mu}_{t,k}$ of one of said state emission distribution is calculated as a function of a difference between said vector of values and a mean, for the considered state, of said at least one driving variable.

In some embodiments, each mean value $\overline{\mu}_{t,k}$ of one of said state emission distribution ($b_k$) is calculated based on the equation:

$$\bar{\mu}_{t,k} = \mu_k^{FF} + \Sigma_k^{TF} \left(\Sigma_k^{FF}\right)^{-1} \left( F_t - \mu_k^{FF} \right)$$

where $\mu^{FF}_k$ (also noted $\mu^F_k$) is a mean value of said at least one driving variable, $\Sigma^{FF}_k$ is a covariance matrix of the input features, and $\Sigma^{TF}_k$ is a covariance matrix of said at least one driving variable relative to the input features.

In some embodiments, said mixture weights are calculated by implementing a forward procedure in which the first mixture weight for the first time step is calculated by an initial calculation for the first time step, and the other mixture weights for subsequent time steps *(t=2...T)* are calculated successively, for each subsequent time step, based on the mixture weights already calculated for the previous time step(s).

In some embodiments, the matrix of state transition probabilities and the set of state emission distribution are determined by implementing an Expectation-Maximization algorithm, for instance the Baum-Welch algorithm.

A second purpose of the present disclosure is to propose methods to calculate hyper-parameters used to implement the method. Such methods indeed are useful to implement the calculation methods presented above with a high level of performance. Such methods can be used to calculate various hyper-parameters, in particular the combination of input features that will be used as vector of observations by the HMM, or the number of states of the HMM.

Accordingly, according to a second aspect, a computer-implemented input features combination selection method for selecting a preferred input features combination to be used as a vector of observations for Hidden Markov Models, denoted HMM is proposed.

In this method, each hidden Markov Model being defined by a number K of states, a matrix of state transition probabilities and a set of K state emission distributions; each coefficient of the state transition probabilities matrix defining a probability of transitioning from a first state at a previous time step to a second state at a current time step; each state emission distribution being a probability distribution of being in a state and having a combined observation vector at a current time step, the combined observation vector combining input values characterizing a situation of the vehicle at said current time step and said at least one driving variable at said current time step, the method comprises:

- constituting a set of input feature combinations;
- for each combination within the set of input feature combinations:

  • training a combination-specific HMM so as to identify the state transition probability matrix and the state emission distributions of the combination-specific HMM;
  • based on a performance score, evaluating a performance of the trained combination-specific HMM for predicting the predicted value(s) using the driving variable calculation methods disclosed herein; and

- based on the evaluated performances of said trained HMMs, selecting the preferred input features combination.

In some embodiments, the performance score includes an accuracy term accurate and a smoothness term, the accuracy term being based on a distance between predicted value(s) and actual observed values of the at least on driving variable, and the smoothness term being based on differences between a derivative over time of said at least one driving variable and a mean value of said derivative.

The distance between the predicted value(s) and the actual observed values of the at least on driving variable can be a difference or an error between the predicted value(s) and the actual observed values. It can be for instance a root mean square error.

In some embodiments, the input features combination selection method comprises:

• establishing an initial list of input features; and
• filtering said initial list so as to determine a reduced list of promising input features; and
  the set of input feature combinations is constituted based on said reduced list.

In some embodiments, the set of feature combinations determination step includes, based on a list of features, performing an exhaustive search of feature combinations, based on said list of features, so as to determine said set of input feature combinations.

In some embodiments, the method comprises iteratively determining a list of promising features by performing an iterative forward sequential search procedure; and the step of selecting the preferred input features combination is based on the performances of the HMMs associated with the combinations derived from said list of promising features.

For instance, the following operations may be performed at each iteration to determine the list of promising features:

S2110) a step of selecting a new feature to be added to the list of promising features;
S2111) said step of constituting a set of feature combinations comprising the newly selected feature as a single-element combination, and all combinations which comprise one or more feature of former list of promising features, and the newly selected feature;
S2112) said step of training HMMs;
S2113) said step of evaluating performances of the trained HMMs;
S2114) a best-performing HMM identification step of identifying a best-performing HMM of the trained HMMs, based on the performance scores evaluated at said step S2113 of evaluating performances of the trained HMMs;
S2115) a test step comprising determining whether a performance of the identified best-performing HMM is greater than a predetermined improvement criterion, and, when the determined performance of said best-performing HMM is greater than the predetermined improvement criterion, adding the new feature to the list of promising features, and starting a new iteration; or, when none of the evaluated performances of the best-performing HMMs is greater than the predetermined improvement criterion, returning the current value of the list of promising features.

In some embodiments, the input features combination selection method comprises:

among the trained HMMs, selecting best-performing trained HMM(s); and
calculating relevance counts of input features based on the evaluated performances of said best-performing trained HMM(s), a relevance count being a number of times a considered input feature appears in the combinations associated with said best-performing trained HMM(s); and the selected input features combination is selected based on the calculated relevance counts.

In addition, according to a third aspect, a computer-implemented number of states determination method for determining a preferred number of states of hidden Markov Model(s), or HMM(s), is proposed.

In said number of states determination method, each hidden Markov Model is defined by a number K of states, a matrix of state transition probabilities and a set of K state emission distributions; each coefficient of the state transition probabilities matrix defining a probability of transitioning from a first state at a previous time step to a second state at a current time step; and each state emission distribution being a probability distribution of being in a state and having the combined observation vector at time t, the combined observation vector combining input values characterizing a situation of the vehicle at said current time step and at least one driving variable at said current time step, said at least one driving variable being related to a state of a driver-vehicle system during driving at a next time step, but not being the steering wheel angle.

The number of states determination method comprises:

- for each value envisaged for the number of states among a plurality of possible values for the number of states, evaluating a performance for that envisaged value by, for at least one HMM for each state :

  • training said at least one HMM;
  • evaluating a performance of the at least one trained HMM for calculating predicted value(s) of said at least one driving variable based on a performance criterion, using one of the driving variable calculation methods according to the present disclosure;

- determining the preferred number of states based on the number of states of one or more HMM exhibiting a best performance, among the trained HMMs.

In the number of states determination method, the step of training the HMM is of course carried out so that the coefficients of the state transition probabilities matrix define a probability, for the vehicle-driver system, of transitioning from a first state at a previous time step to a second state at a current time step, and so that the state emission distribution be a probability distribution of being in a state and having the combined observation vector at time t, the combined observation vector combining input values characterizing a situation of the vehicle at the current time step and at least one driving variable at the current time step.

In some embodiments, the performances for the multiple possible values for the number of states are evaluated by performing successive iterations in a loop, the value envisaged for the number of states being incremented at each iteration; at each iteration except the first one, it is evaluated whether a global performance indicator based on the performance of at least one of said at least one trained HMM (evaluated at the current iteration of the loop) is greater, vis-à-vis the predetermined improvement criterion, than the global performance indicator evaluated at a former (preceding) iteration; and, in the loop, a new iteration is initiated only if the global performance indicator has been evaluated as being greater vis-à-vis the predetermined improvement criterion than the global performance indicator evaluated at the former iteration.

Accordingly, the values envisaged for the number of states are incremented (that is, new iterations are initiated) only if when the value is incremented, an improved global performance is observed.

The global performance indicator can be any metric which represents the global performance of the at least one of the trained HMM(s). For instance, in some embodiments the global performance indicator is the average of the performances of the trained HMMs.

The loop may be performed once (for instance, an HMM is trained for each available validation recording). In this case, the performance of the HMM is based preferably on the performances thereof across all validation recordings.

In another embodiment, the loop is performed once for each validation recording.

In this case, the determination of the preferred number of states is made based on the performances scores of trained HMMs which have been trained during the different loops for the different validation recordings.

In a particular implementation, the proposed method is determined by computer program instructions.

Accordingly, another purpose the present disclosure is to propose one or more computer program(s) comprising instructions which, when the instructions are executed by a computer, cause the computer to carry out the steps of one of the above-defined methods, in accordance with the present disclosure. The computer program(s) may use any programming language, and be in the form of source code, object code, or code intermediate between source code and object code, such as in a partially compiled form, or in any other desirable form. The computer may be any data processing means, for instance one or more personal computer(s), one or more processors, one or more remote servers, etc. It can be made up of a single machine or a plurality of machines, for instance spread over different locations.

The present disclosure also includes a non-transitory computer readable medium, having the one or more above defined computer program(s) stored thereon. The computer-readable medium may be an entity or device capable of storing the program. For example, the computer-readable medium may comprise storage means, such as a read only memory (ROM), e.g. a compact disk (CD) ROM, or a microelectronic circuit ROM, or indeed magnetic recording means, e.g. a floppy disk or a hard disk.

The present disclosure also includes a computer-implemented driving variable calculation system for calculating at least one driving variable related to a state of a driver-vehicle system during driving at a next time step; said at least one driving variable calculation system comprising one or more processors and a computer-readable medium; the computer-readable medium comprising computer instructions stored therein, wherein the instructions, when executed by the one or more processors, cause the one or more processors to carry out the steps of any of the above-defined driving variable calculation methods.

The present disclosure can be implemented in any kind of human-driven vehicle. It therefore further includes a vehicle comprising the above-defined driving variable calculation system.

BRIEF DESCRIPTION OF THE DRAWINGS

The present invention may be better understood and its numerous other objects and advantages will become apparent to those skilled in the art by reference to the accompanying drawing wherein like reference numerals refer to like elements in the several figures and in which:

Fig.1 is a schematic representation in top view of a vehicle equipped with a driving variable calculation system according to the present disclosure;
Fig.2 is a schematic functional representation of the driver torque calculation system mounted in the vehicle of Fig.1;
Fig.3A is a block diagram representing steps of a first approach of a first method for selecting a preferred input features combination, for the methods for calculating driving variable(s) according to the present disclosure;
Fig.3B is a block diagram representing steps of a second approach of the first method for selecting a preferred input features combination, for the methods for calculating driving variable(s) according to the present disclosure;

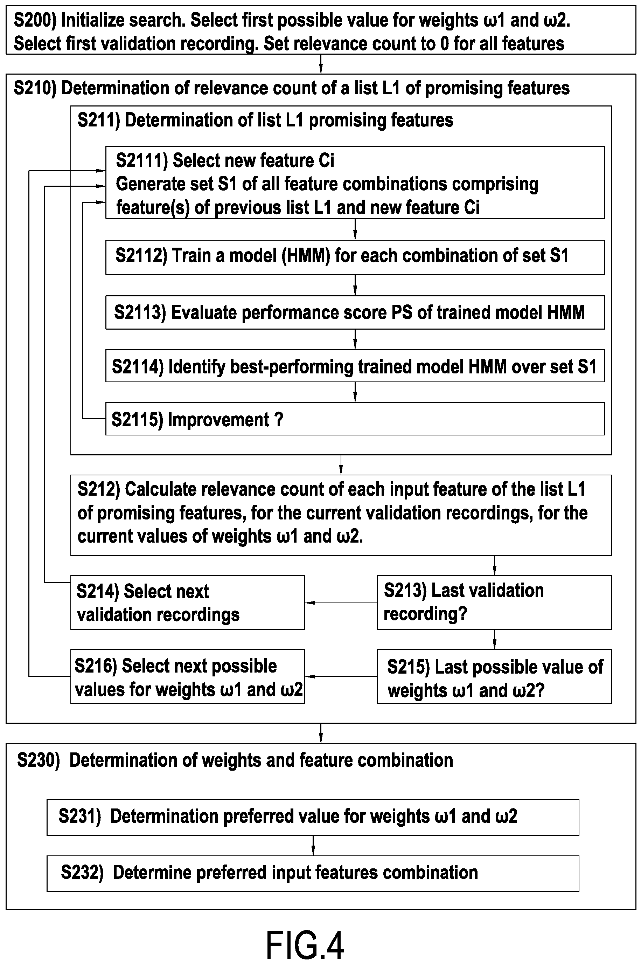

Fig.4 is a block diagram representing steps of a second method for selecting a preferred input features combination, for the methods for calculating driving variable(s) according to the present disclosure;

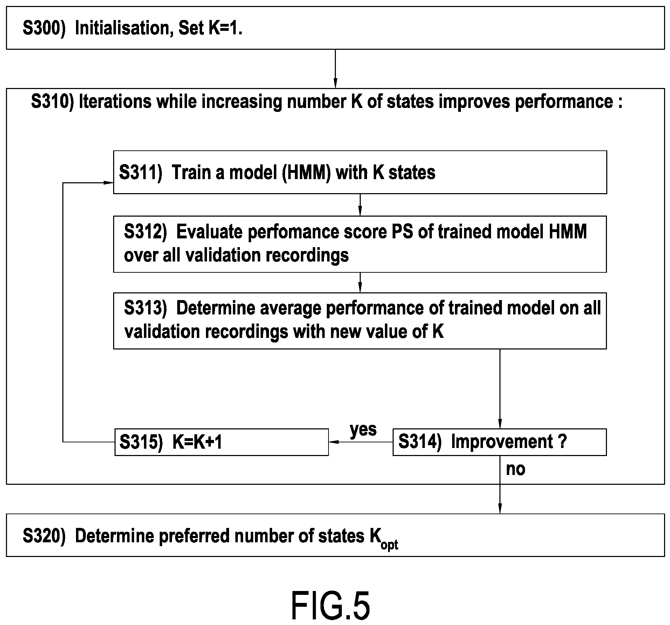

Fig.5 is a block diagram representing steps of a first method for determining an appropriate number of states, for the methods for calculating driving variable(s) according to the present disclosure;

Fig.6 is a block diagram representing steps of a second method for determining an appropriate number of states, for the methods for calculating driving variable(s) according to the present disclosure;

Fig.7 is a diagram showing curves representing relevance counts calculated for different values of accuracy vs smoothness trade-off weights, during the implementation of an input features combination selection method according to the present disclosure; and

Fig.8 is a block diagram representing steps of a driving variable calculation method according to the present disclosure.

## DESCRIPTION OF PREFERRED EMBODIMENTS

An advanced driver assistance system ADAS (hereafter, 'ADAS') comprising a driving variable calculation system DTCS according to the present disclosure will now be presented.

In this embodiment, the driving variable is the driver torque, as an example of a variable related to a state of a driver-vehicle system during driving, and whose value depends on the evolution of the driver-vehicle system. It should be clear however that methods and systems according to the present disclosure can be applied to the calculation of any other suitable driving variable(s).

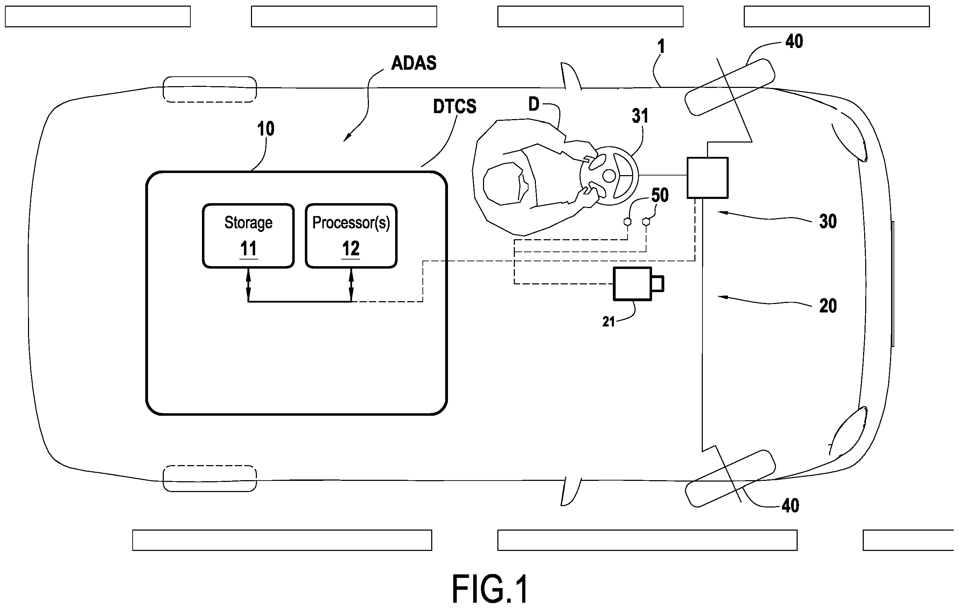

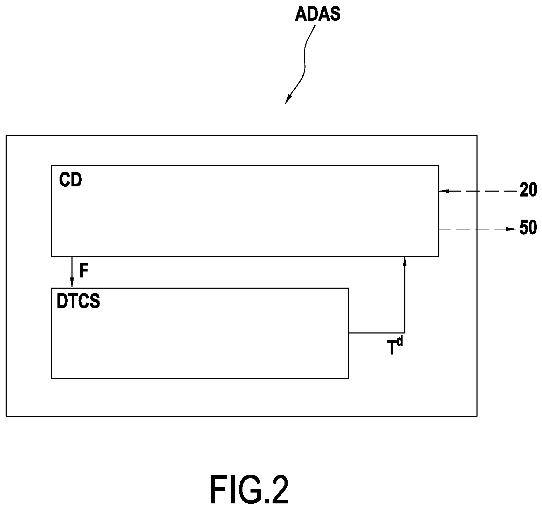

The physical structure of the ADAS system is illustrated by Fig.1, while its functional units are illustrated by Fig.2. On these figures, the ADAS is presented in operation, mounted on a vehicle 1. The vehicle 1 is a car, which represents a nonlimiting example of a vehicle on which a system according to the present disclosure can be mounted.

GENERAL ARCHITECTURE OF THE ADAS SYSTEM

Material architecture

The vehicle 1 includes the advanced driver assistance system ADAS.

The ADAS system comprises a central driving computer 10 ('computer 10'), a set of sensors 20, each sensor being connected to computer 10, a steering unit 30, front wheels 40, actuators 50, and various other components.

Most components of the ADAS system are shared components, which are used to perform multiple tasks. That is, the components of the ADAS system perform the functions of the ADAS system, but may also perform other functions in vehicle 1. The ADAS system includes in particular, as mentioned above, a driver torque calculation system DTCS (as an example of a driving variable calculation system according to the present disclosure), which is essentially constituted by the computer 10.

Although computer 10 is represented on Fig.1 in a single box, it may comprise one or more processors, and can therefore be a distributed calculation system, distributed over a plurality of processors, possibly physically arranged on different locations.

The steering unit 30 comprises in particular a steering wheel 31 for steering front wheels 40.

The set of sensors 20 comprises in particular sensors configured to perceive an external environment of car 1. In this purpose, it comprises several cameras. One of these cameras, the front camera 21 is represented on Fig.1. The values outputted by sensors 20 are transmitted in real time to computer 10.

During driving, in order to steer car 1, the driver D of car 1 applies a driver torque $T^d_t$ (at a time point t) to the steering wheel 31.

The functions (the functional units) of the ADAS system, and in particular of the DTCS system, are implemented on the computer 10.

Computer 10 comprises a non-transitory storage medium 11 and one or more processor(s) 12.

The computer 10, in particular in its storage medium 11, stores instructions which when executed by the one or more processor(s) 12 cause the one or more processor(s) 12 to implement the different functional units or functions of the ADAS system, and in particular of the DTCS system.

The one or more processors 12 are intended to be representative of the presence of any one or more processors or processing devices, of any of a variety of forms.

A computer program $P_{DT}$ to perform driving tasks, which includes in particular a sub-program $P_{TC}$ to calculate a driver torque, according to the present disclosure, is stored in storage medium 11. This program, and the storage medium 11, are examples respectively of a computer program and a computer-readable recording medium pursuant to the present disclosure.

The storage medium 11 of the computer 10 indeed constitutes a recording medium according to the invention, readable by the one or more processor(s) 12 and on which said program is recorded.

Functional architecture

The functional units of the ADAS system comprise a main central driving unit CD and the DTCS system (Fig.2). The central driving unit CD issues the main driving controls of the vehicle, in particular to control acceleration and/or braking, etc, while the DTCS system calculates the driver torque $T^d_t$ at successive time points, and transmits that information to the central driving unit CD.

Both units are configured to execute programs (in particular programs $P_{DT}$ and $P_{TC}$, for the ADAS system) iteratively at successive loops indexed by an index i. The successive loops i are executed at successive time points t (t=1.... t=T).

MODEL

The HMM model

The steering behaviour of the driver is modelled with a fully connected hidden Markov Model or HMM. The Hidden Markov Model HMM is configured to predict the driver torque $T_d$ at a future time step t+1, based on a vector $F_t$ of input values. The HMM models the dependencies between the driver torque $T_d$ (as an example of one or more driving variables whose values for the next time step are to be calculated) and the current driving situation $F_t$.

In some embodiments, the HMM is driver-specific, i.e. one model is trained for each driver, using driving data from that specific driver. However, an HMM may be trained to predict torque for a group of drivers, or for instance any driver.

The hidden Markov Model HMM is defined by a number K of states $s_k$, and three model parameters related to the model's behaviour, collectively denoted as $\theta = \{\pi, A, B\}$, where $\pi$ defines the prior probabilities for starting in one of the respective states sk; A is the matrix of state transition distributions, and B is the set of K state emission distributions bk.

In the matrix A, each coefficient $a_{ij}$ defines a probability of transitioning from a first state $s_i$ at a previous time step (t-1) to a second state $s_j$ at a current time step t.

Each state emission distribution $b_k$ is a probability distribution of being in a state $s_k$ and observing the combined observation vector $x_t$ at time t, the combined observation vector $x_t$ combining the input values $F_t$ and the driver torque $T^d_t$ at time t.

Accordingly, the following notations are used herein:

k = {1, ..., K}: Index of the Steering states $s_k$

$F_t \in R^{Nf}$ : vector of Nf input features, defining the current driving scenario at time t.

$T^d_t$: steering-torque applied by the driver D to the steering wheel 31 at time t.

$X^T = [Ft, T_t^d]^T$: Combined observation vector at time t, which defines the state of the vehicle at time t.

$\pi \in R^k$ is a vector of prior probabilities for starting in state $s_k$, where k={1, ..., K} at time t=1.

$A \in R^{K \times K}$ is a matrix of probabilities, denoted as the (discrete) state transition matrix. Each element $a_{jk}$ describes the probability of transitioning between state $s_j$ at time t-1 to state $s_k$ at time t, for j,k = {1, ..., K}.

B is the set of state emission (control) behaviours, $b_k = P(x_t | k)$ for k = {1, ..., K}, and is defined as a probability distribution of being in state k and observing $x_t = [Ft, T_t^d]^T$, the combined observation vector at time t.

Accordingly, the aim of the training phase in which the hidden Markow Model (or HMM) is trained is to learn the joint probability distribution of the current driving situation or state $x_t$, defined by a number of input features (or observations) F and the driver steering-torque $T_d$.

Denoting $s_t$ as the state at time t, the random variable $S = \{s_1, ..., s_T\}$ denotes the hidden state sequence from time t = 1 to time t = T. The series of past and present records $X = \{x_1, ..., x_T\}$ until present time t=T is denoted as the observation sequence.

In accordance with the usual definition of a Hidden Markov Model, at time point t=T, the joint state-observation probability distribution P (X, S|θ) is defined as:

$$p(X,S|\pi) = p(s_1|\pi) \left[ \Pi_{t=2}^{T} P(S_t|S_{t-1},A) \right] \Pi_{t=1}^{T} p(x_t|s_t,B)$$

The vector F of input features is chosen beforehand. This vector contains the measured variables which are considered have an influence on the driver torque $T_d$ at the following time step.

The vector F may comprise one or more variables related to inputs of the driver (e.g., steering wheel angle, steering wheel velocity, steering wheel acceleration); one or more variables related to vehicle dynamics (e.g., lateral velocity, lateral acceleration, slip angle, yaw rate, yaw acceleration, roll angle, roll velocity, roll acceleration); and/or one or more variables related to vehicle position relative to the road and derivatives thereof (e.g., deviation distance, deviation angle and/or road curvature, at current vehicle location; and/or deviation angle and/or road curvature at a first, a second distance ahead of the vehicle).

In an embodiment, the vector F may for instance comprise the following variables: steering wheel angle, deviation angle, road curvature at a first distance ahead of the vehicle, road curvature at a second distance ahead of the vehicle (the second distance being larger than the first distance), yaw rate, lateral acceleration, roll angle, road curvature at the current location of the vehicle, slip angle, lateral velocity of the vehicle. However the prediction can also be performed with a larger or smaller set of features.

For instance, in another exemplary embodiment, the set of features only includes the steering wheel angle and the yaw rate. The estimated deviation angle and the deviation distance (lateral distance from the road centerline) a certain time period in the future can also be included in the set of input features to increase smoothness at the next time step, and to increase accuracy of torque prediction at subsequent time steps.

Indeed, based on the data acquired by sensors (e.g. cameras), deviation distances and deviation angle in the future can be calculated assuming constant vehicle speed during that period for calculation. These values are of course only approached values, but due to their "slow" changing dynamics, they are meaningful, whereby using these variables is widely used in the automotive industry (in different contexts though).

The Gaussian Mixture Model

In addition, in order to facilitate the calculation of predicted driver torque using the HMM, the proposed model further relies on Gaussian Mixture Regression (GMR) to generalize the motion during reproduction. In contrast to other regression methods such as Locally Weighted Regression, Locally Weighted Projection Regression, or Gaussian Process Regression, in GMR methods the regression function is not modelled directly, and instead a joint probability density function of the data is calculated; the regression function is then derived from the joint density model.

Advantageously, the parameters of the HMM can be learned beforehand during a prior training phase carried out off-line, while during inference the regression process requires little computing power and can therefore be executed very rapidly, in real time.

Accordingly, the HMM state emissions are modelled as a Gaussian Mixture Model (GMM).

Consequently, the driver steering-torque $T_{est}^d$ is estimated using the Gaussian Mixture Regression (GMR) method. The details of this method are disclosed for instance by Ref.[5] or [10].

In this method, specifically the density of the data is estimated. In this estimation, no distinction is made between input variables (the measured features F) and output variables (the driver torque $T_d$). The joint density is estimated, and this estimate is then used to obtain estimated value(s) of the driver torque $T_d$.

Advantageously with this method, to obtain an estimate of the output variable (here, the driver torque), it is sufficient to estimate the expectation of the output variable $T_d$, given the measured variables F.

Indeed, with the system (the driver-vehicle system) being modelled using the HMM presented above, the Gaussian mixture distributions $(x,,,\Sigma_k)$ used in the GMR method ($\mu_k$ and $\Sigma_k$ are defined below) simply correspond to the respective Gaussian state emission distributions $b_k$ for $k = 1, ...,K$. In addition, the steering-torque $Td$ is considered as the output variable y and the input features F used in the model are considered as the input variable x.

Since the steering-torque Td is a continuous variable, each state emission distribution $b_k$ is assumed to be a single multivariate Gaussian, $b_k \sim N(\mu_k, \Sigma_k)$, with $N(\mu_k, \Sigma_k)$ being the normal distribution with mean $\mu_k$ and variance $\Sigma_k$.

Since the combined observation vector $x_T$ combines the input features F and the driver torque $T_d$, its mean $\mu_k$ and covariance matrix $\Sigma_k$ can be calculated based on the mean and covariance of the input (F) and output ($T_d$) features as follows:

$$\mu_k = \begin{bmatrix} \mu_k^F \\ \mu_k^T \end{bmatrix} \text{ and } \Sigma_k = \begin{bmatrix} \Sigma_k^{FF} & \Sigma_k^{FT} \\ \Sigma_k^{TF} & \Sigma_k^{TT} \end{bmatrix}$$

The distribution of each mixture component is now denoted as $p(T \mid F; \overline{\mu_{T,k}}, \overline{\Sigma k})$, where $\overline{\mu_{T,k}}$ and $\overline{\Sigma_k}$ can be calculated as:

$$\overline{\mu_{t,k}} = \mu_k^{FF} + \Sigma_k^{TF}(\Sigma_k^{FF})^{-1}(F_t - \mu_k^{FF})$$

$$\overline{\Sigma_k} = \Sigma_k^{TT} + \Sigma_k^{TF}(\Sigma_k^{FF})^{-1}(\Sigma_k^{FT})$$

where $F_t$ is the vector of input feature values at the considered time step t.

Training: Determination of the parameters of the Hidden Markov Model using the EM algorithm

Training dataset

In order to identify the parameters $\theta = \{\pi, A, b_k\}$ of the HMM, a training dataset is collected beforehand.

This training dataset comprises a large number of time-stamped recordings; each recording comprising records of the values of all the measured features F at successive time points, and, for each considered time point t, as ground truth value, the value of the driving torque $T_d$ applied by the driver to the steering wheel at the following time point t+1.

Training operations

Once the training dataset has been constituted, the parameters $\theta$ of the model (priors $\pi$, transition probabilities A, means and standard deviations of the Gaussian distributions $b_k$) are identified.

The parameters of the model are learned from the recordings of the training dataset using a suitable algorithm, such as the Expectation-Maximization algorithm (EM). For instance, the Baum-Welch Algorithm, an adapted version of the Expectation-Maximization algorithm, may be used. A detailed presentation of the Expectation-Maximization algorithm and the Baum-Welch algorithm can be found in Ref.[3].

When training is completed, the parameters of the model $\theta = \{\pi, A, B\}$ are set; their values (the matrix A, and the state emission distributions $b_k \sim N(\mu_k, \Sigma_k)$, remain fixed during inference.

The set of input features F as well as the number of hidden states K are free model parameters, which are determined separately, for instance using the methods described below.

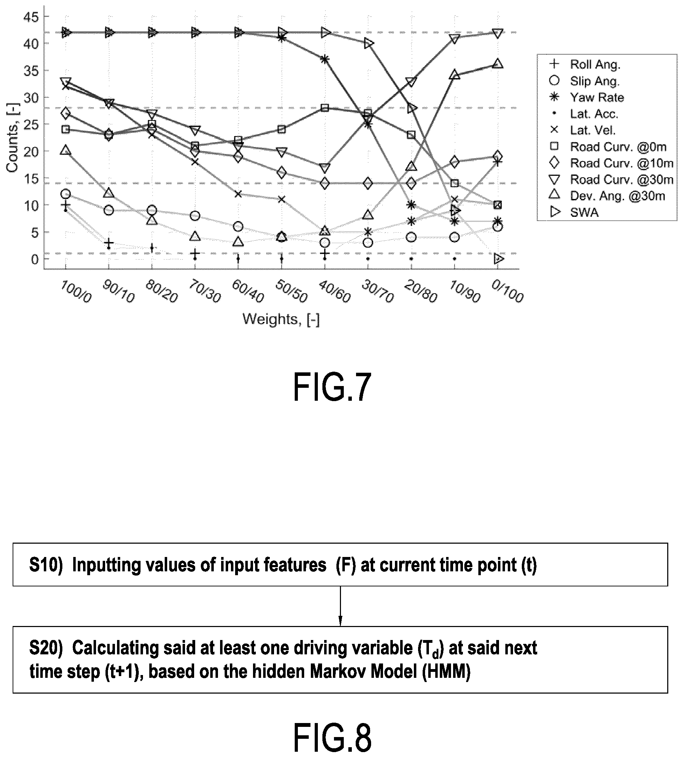

Inference - Driving variable(s) calculation (Fig.8)

At inference time, at each time step t=T, the estimated driver torque for time step t=T+1 is calculated by performing the following steps:

S10) inputting a vector of values of input features F at the current time point T;

S20) based on said vector, calculating the driver torque $^{Test}_{d,T}$ at a next time step (T+1) as being equal to the expectation of a probability ($p(T_d|F)$) to obtain a certain value of the driver torque ($T_d$) being given that the input features (F) have said vector of values, said probability being calculated based on the hidden Markov Model (HMM).

This expectation of said probability can be calculated by any appropriate algorithm.

In the embodiment presented herein, in accordance with the usual methods for HMMs (see e.g. Ref.[5]), the estimated driver torque $T_d$ for time t=T+1 is calculated at each time step t=T using the equation below:

$$T_{d,T}^{est} = \sum_{k=1}^{N} \omega_k \overline{\mu_{T,k}}$$

Specifically, it is considered that the weights $\omega_k$ in the above equation are represented by a variable $\alpha_{t,k}$, representing the probability of observing the partial observation sequence $\{F_1, F_2, ..., F_t\}$ until time t and being in state $s_k$ at time t, given the model parameters $\theta$. This variable $\alpha_{t,k}$ is denoted the HMM Forward Variable. The algorithm on which this calculation is based is presented by Ref.[6].

Consequently, the weights $\omega_k$ in the above equation can be determined as the variables $\alpha^F_{t,k}$, which represent the mixture weights, referred to as the Forward Variable in Ref.[3]. These mixture weights $\alpha^F_{t,k}$ are calculated recursively through the HMM representation, using both spatial and temporal information contained in the HMM.

For each state $s_k$ (k=1...K), the mixture weights $\alpha^F_{t,k}$ over the considered time period (t=1... t=T) can be calculated as follows:

Step 1: Initialization
The first value $\alpha^F_{1,k}$ (for time step t=1) is initialized with prior probability $\pi_k$ as:

$$\alpha_{1,k}^F = \frac{\pi_k \, N(F_1|\mu_k^F, \Sigma_k^{FF})}{\sum_{j=1}^{K}[\, \pi_j \, N(F_1|\mu_k^F, \Sigma_k^{FF})}$$

where F1 is the vector of values of the input features at t=1, $N(F1|\mu_k^F, \Sigma_k^{FF})$ is the probability to observe F1 at time t=1 (assuming being in the state $s_k$).

Step 2 : Induction

Then, at each new time point t, the values of the mixture weights $\alpha_{t,k}^F$ for the new time point are successively calculated as:

$$\alpha_{t,k}^F = \frac{(\sum_{j=1}^{K} \alpha_{t-1,j}^F \, a_{j,k})(N(F_t|\mu_k^F, \Sigma_k^{FF})}{\sum_{i=1}^{K}[(\sum_{j=1}^{K} \alpha_{t-1,j}^F \, a_{j,i})N(F_t|\mu_k^F, \Sigma_k^{FF})}$$

for time step t=1 to time step t=T.

The mixture weight $\alpha_{t,k}^F$ can be defined as the probability of observing the sequence x ({$x_1$, $x_2$ ...... $x_T$}) at time t, assuming being in state sk. Different methods can be applied to calculate these values, among them the Forward Variable method proposed by Ref.[6].

When all the values of the mixture weights $\alpha_{t,k}^F$ have been calculated (that is, for all the states and for all times from t=1 to t=T), the value driver steering-torque $T_{est}^d$ is calculated based on the values of the mixture weights $\alpha_{t,k}^F$.

The estimated driver steering-torque $T_{est}^d$ at the next timestep T+1 is therefore calculated using the formula:

$$T_{d,T}^{est} = \sum_{k=1}^{K} \alpha_{t,k}^F \left[\, \mu_k^{FF} + \Sigma_k^{TF} \left(\Sigma_k^{FF}\right)^{-1} (F_T - \mu_k^{FF})\right]$$

The above value $T_{d,t}^{est}$ calculated at the current timestep t=T represents the estimated driver torque at the next timestep $T_{d,T+1}^{real}$.

In some embodiments, the driving variable(s) (for instance, the driver torque) is or are predicted over a plurality of future time steps.

Various methods can be used to predict the driving variable(s)over a plurality of future time steps. For instance, during training, driving variable(s) data at future time steps can be used to train the model. Consequently, the HMM trained in this manner will be able to predict the driving variable(s) over a plurality of time steps.

Feature selection process

Appropriately selecting the input features constituting vector F is an important aspect of the proposed approach. Doing so indeed improves learning speed and model performance, while reducing risk of overfitting and required data storage. Accordingly, there is a need for methods to determine an input features combination F which can be used to implement efficiently the above driving variable(s) calculation methods. Such a features combination is called hereafter a sought 'best input features combination', although it may of course not be the best input features combination. This combination is also called the 'preferred input features combination'.

For this reason, methods to determine such a best input features combination are proposed below.

In these methods, as opposed to feature extraction where data dimensionality is reduced by constructing new relevant features, feature selection is preferred in order to use measured features, which have physical interpretations (e.g., the steering wheel angle, etc.). Feature selection reduces data dimensionality by directly selecting a relevant combination, making the final model more easily interpretable.

The proposed methods may be (or may include) wrapper-based selection methods.

Wrapper-based selection methods (that is, wrapper methods) are methods in which the performance of feature combinations is evaluated via a modelling algorithm. In the present case, the modelling algorithm is an HMM trained using the methods presented above for predicting the at least one driving variable. Accordingly in the methods proposed herein for selecting the most appropriate features, the feature selection is performed by using an actual HMM used as a black box to evaluate a large number of possible feature combinations based on the HMM's performance for predicting the driving variable(s) (that is, the driver torque).

Wrapper methods are disclosed for instance by Ref.[9].

In each case, the selection of the best input features combination requires the preparation of a training dataset.

Preliminary step - Preparation of training dataset

Driving recordings are recorded in a database. Each driving recording includes records of a number of driving variables, including the driving variable(s) which are to be calculated, at a number (noted N) of successive time steps.

From this database, two datasets are extracted: A training dataset, which will be used to train the HMMs, and a validation dataset, which will be used to test their performances. The recordings of the validation dataset are called 'validation recordings'.

Two input features selection methods will now be presented. Each of these methods shows how to determine a 'best input features combination', that is, a set of input features which can be used to efficiently implement the methods proposed above to calculate the driver torque. In the first method, after a filtering step has been performed to identify a reduced number of promising input features, an exhaustive search is performed based on these features. In the second method, the best input features combination is directly determined based on an initial list of potential input features, using a Sequential Forward Search (SFS) method. Both methods are wrapper-based methods.

First method for input features selection

The first method can be summarized as follows: As a first optional step, promising input features for vector F are preselected using a filter method. Filter methods are independent of the learning algorithm and rank features based on data performance metrics. Such methods are computationally efficient, but do not always remove all redundant features.

Then, in a subsequent step the set of promising input features selected by the filter is processed by an exhaustive wrapper, which identifies the best input features combination. Advantageously, the initial filter method, followed by a wrapper method (which will be presented below) efficiently combines the best properties of filter- and wrapper- methods.

The first method comprises the following steps.

S100) Initialization

At step S100, the process is initialized by establishing an initial list L0 comprising all input features which are considered as potential candidates to be part of the best input features combination.

S110) Filtering: Selection of a list L1 of promising input features

In step S110, a filter ranks each of the candidate features according to their univariate relevance with the steering-torque $T_d$. A list L1 of input features which might be suitable to implement the methods proposed above to calculate the driver torque is determined by performing the following sub-steps S111-S113.

First, at step S111, for each feature and each recording, a correlation coefficient is calculated to evaluate the correlation between each feature and the other features.

This correlation coefficient for instance evaluates the monotonic relationship (at non-constant rate) between a considered input feature and the other candidate features of list L0. In the present embodiment, the absolute Spearman correlation coefficient is chosen, which is defined as:

$$|r_s| = |1 - \frac{6 \sum_{i=1}^{N} d_i^2}{N(N^2 - 1)}|$$

where N is the number of candidate input features in list L0 and $d_i$ is the difference in rank between an input feature of index i and the evaluated input feature.

Then, at step S112 the input features of list L0 are ranked, based on their correlation coefficients. They can be ranked for instance based on the averages of their respective correlation coefficients over the different validation recordings.

Then, at step S113 the best ranked features are selected to form a list L1 of promising input features. These best ranked features can be the most correlated features, for instance the 10 input features having the highest Spearman correlation coefficients.

In the embodiment presented herein, at the end of step S113, the following input features were identified as promising input features:

| Nr | Feature | \| rs \| |
|---|---|---|
| 1 | Steering Wheel Angle | 0.9557 |
| 2 | Deviation Angle @30m | 0.9484 |
| 3 | Road Curvature @10m | 0.9321 |
| 4 | Road Curvature @30m | 0.9251 |
| 5 | Yaw Rate | 0.9249 |
| 6 | Lateral Acceleration | 0.9143 |
| 7 | Roll Angle | 0.9123 |
| 8 | Road Curvature @0m | 0.9099 |
| 9 | Slip Angle | 0.9062 |
| 10 | Lateral Velocity | 0.9058 |

where @0m, @10m, @30m means at a distance of 0, 10 and respectively 30m ahead of the vehicle.

S120) Determination of the performances of combinations comprising features of list L1

Then at step S120, the relative performances of the features of list L1 will be assessed by evaluating the performances of combinations comprising one or more features of list L1.

In this purpose, the following steps S121-S123 are performed.

First at step S121, a set S1 comprising all the input features combinations which include one or more features of list L1 is generated.

Then at step S122, for each combination of set S1, a combination-specific HMM is trained based on the training recordings (that is, a dedicated HMM, associated with the considered combination, is trained). In particular, the state transition distributions and the state emission distribution of the combination-specific HMM are identified.

In the embodiment presented herein, these HMMs only have two states (K = 2), to balance model complexity with computation time.

Then, at step S123, the performances of the trained combination-specific HMMs are evaluated. Their performances are evaluated based on a performance criterion or performance score PS, and are calculated for each validation recording.

In the embodiment presented herein, the following performance score PS is used to evaluate the performance of an HMM to predict the driver torque :

$$PS = \omega_1 \cdot \|(100 - A_{T,est})\| + \omega_2 \cdot \|SM_{T,est}\|$$

where $A_{T,est}$ and $SM_{T,est}$ are respectively the model accuracy and estimation smoothness metrics, defined below, and $\omega_1$ and $\omega_2$ are metric weights. Accordingly, the models having the lowest performance score PS are considered to be the best ones.

The Root-Mean-Square-Error (RMSE) of estimated steering-torque $RMSE_{T,est}$ is defined as:

$$RMSE_{T,est} = \sqrt{\frac{1}{N}\sum_{i=1}^{N}(T_{i,est} - T_{i,d})^2}$$

where N represents the number of data points of the recordings (that is, the number of time steps), Ti,est is estimated driver torque at time-step i, and Ti,d is the real (measured) driver torque at time-step i.

The Model estimation Accuracy $A_{T,est}$ is defined as:

$$A_{T,est} = \left[1 - \frac{1}{SD(T_d)} RMSE_{T,est}\right] * 100$$

The SMoothness of the estimated steering-torque $SM_{T,est}$ is defined as:

$$SM_{T,est} = \sqrt{\frac{1}{N}\sum_{i=1}^{N}(\dot{T}_{i,est} - \overline{\dot{T}_{est}})}$$

where N represents the number of data points of the recordings, $\dot{T}_{i,est}$ is the rate of change of estimated driver torque at time-step i, and $\overline{\dot{T}_{est}}$ is the rate of change of measured driver torque at time-step i.

The performance score PS accordingly is an evaluation of the performance of the HMM for predicting driver torque values $T_d$ which are accurate (accuracy term $A_{T,est}$) and which vary smoothly (smoothness term $SM_{T,est}$), for a certain considered combination of features F. In the case of the above performance score PS, the best performance score is the one which has the smallest value.

Since the performance score PS depends on the proper choice of features for vector F, the performance score PS is also an estimation of whether the combination of features chosen for vector F makes it possible to efficiently calculate the driver torque. For this reason, in the present document the performance of a combination of input features can also be considered as being the performance of the HMM associated with this combination and vice-versa.

Selection of best input features combination

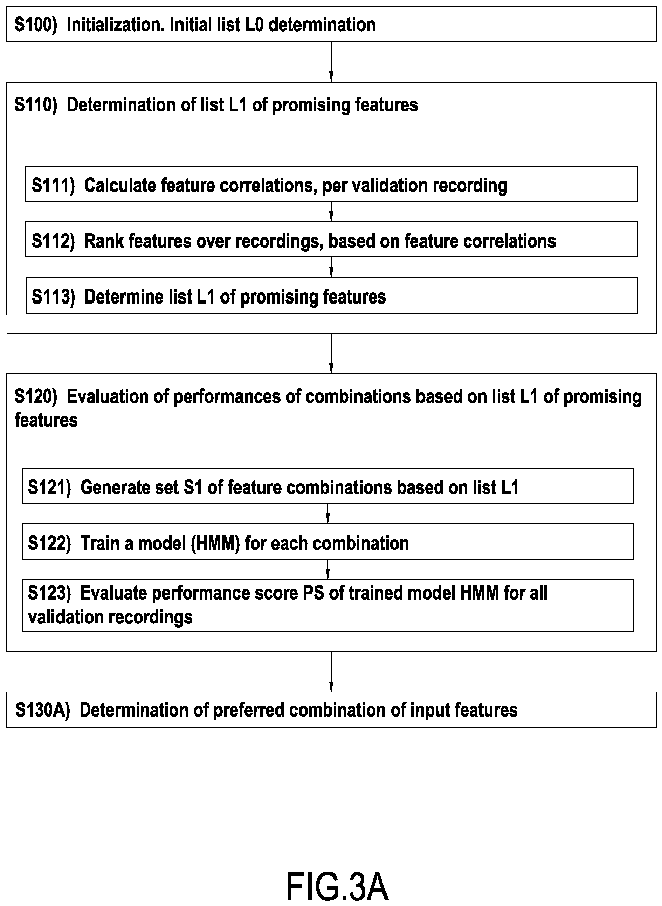

Two approaches will now be presented to identify the final combination of input features for vector F. The first one can be used if the weights $\omega_1$ and $\omega_2$ which define the performance score are considered fixed, while the second one can be used to determine simultaneously the best input features combination and preferable values for the weights $\omega_1$ and $\omega_2$. Determination of best input features combination when the performance score weights are fixed (Fig.3A)

In the first approach, the weights $\omega_1$ and $\omega_2$ which define the performance score are considered fixed.

In this approach, once all the performance scores of all combinations of set S1 have been evaluated at step S120 for all validation recordings, at a subsequent step S130A the combination associated with the combination-specific HMM which exhibits the best performance score PS is retained as the best input features combination.

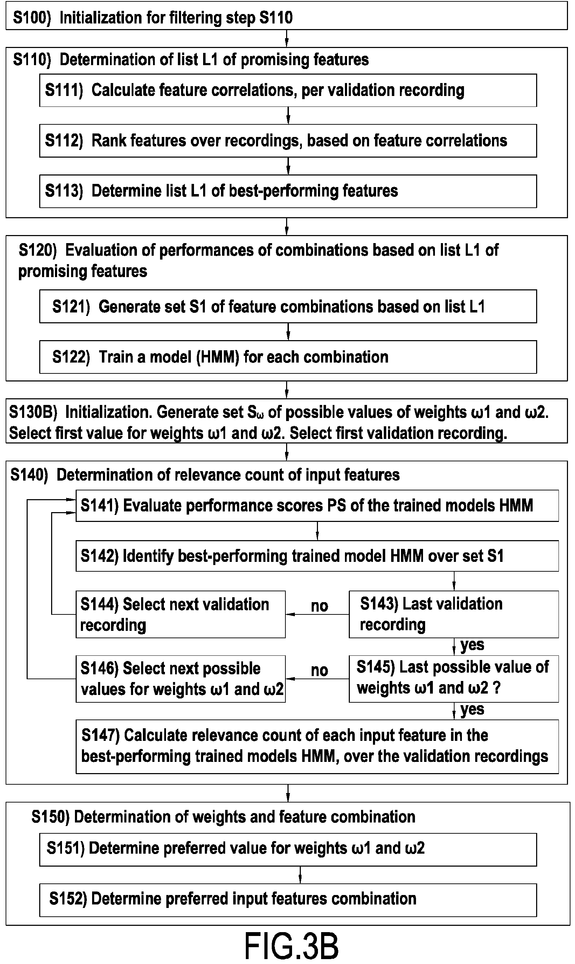

For instance, the input features combination which exhibits the best average performance over all the validation recordings will be considered as being the best input feature combination. Simultaneous determination of best input features combination and performance score weights (Fig.3B)

In the second approach, the most appropriate values of the performance score weights $\omega_1$ and $\omega_2$ and the best input features combination are determined simultaneously.

In this purpose, the following steps are performed.

First, the initialization step S100 and the list L1 determination step S110 of the first approach are performed.

Then, a wrapper-method is performed to obtain performance scores of combinations based on the features of list L1.

Therefore, first, steps S121 and S122 of step S120 of the first approach are performed: A set S1 comprising all the features combinations that can be obtained based on list L1 is defined (step S121); in addition, for each input features combination of set S1, a combination-specific HMM is trained (step S122).

Then, an initialization step S130B is performed. In step S130B, a set $S_\omega$ of possible values for weights $\omega_1$ and $\omega_2$ is generated (for instance, $\omega_1$ = 0; 0,1; 0,2; 0,3... 1; and $\omega_2$ = 1 - $\omega_1$). These values are determined so as to cover a range of weight settings, to map feature relevance for different accuracy and smoothness trade-offs.

In addition, a first pair of values $\omega_1$ and $\omega_2$ is selected, and a first validation recording is selected.

Then, at step S140, the performance scores PS of the different HMMs, and consequently the relevance counts of the associated input features combinations, are determined as follows.

At step S141, for the considered value of the weights $\omega_1$ and $\omega_2$, and the considered validation recording, the value of the performance score PS is determined for each HMM trained at step S122.

At step S142, based on these performance values, the best-performing HMM is identified.

At step S143, it is considered whether all the validation recordings have been considered. If this is not the case, the algorithm jumps to step S144; otherwise, it continues at step S145.

At step S144, another validation recording is retrieved from the validation database, and is deleted from that database; the algorithm jumps back at step S141, so as to execute again step S140 based on the newly selected validation recording.

At step S145, it is considered whether all the possible values envisaged for weights $\omega_1$ and $\omega_2$ have been considered. If this is not the case, the algorithm jumps to step S146; otherwise, it continues at step S147.

At step S146, new values envisaged for weights $\omega_1$ and $\omega_2$ are retrieved from set $S_\omega$, and are deleted from that set; the algorithm jumps back at step S141, so as to execute again step S140 based on the new values of weights $\omega_1$ and $\omega_2$.

At step S147, for each input feature of list L1, the number of times the input feature appears in the combinations associated with the identified best-performing models is counted, for all the validation recordings. This count is made separately for the different possible values of the weights $\omega_1$ and $\omega_2$.

The count value obtained in this manner is called 'relevance count' and is considered to be an estimate of the relevance of the input feature, for belonging to the best input features combination, for the respective values of the weights. That is, the higher the count, the more relevant the input feature is considered.

Then, at a final step S150 preferable values for the weights and the best input features combination are determined by performing sub-steps S151 and S152.

First, at step S151, the preferred values of the weights $\omega_1$ and $\omega_2$ is selected based on the relevance count of the different features. These preferred values can be chosen so as to have the right balance between the different terms on which the performance score is based, for instance in the present embodiment, the accuracy and the smoothness.

For instance, these preferred values can be chosen so as to select the weight trade-off (that is, the pair of values $\omega_1$ and $\omega_2$) that results in the simplest model with an optimal balance between estimation accuracy and smoothness.

Finally, at step S152, the features which exhibit the highest relevance count for the selected values of weights $\omega_1$ and $\omega_2$ may be retained to constitute the best combination of input features.

Various levels can be chosen to select the best input features combination.

In order to limit the number of features in the best input features combination, a specific selection strategy may be defined, for instance:

- Strict Selection: The best input features combination comprises features with at least 66% relevance (that is, which have appeared in the features combination of the best-performing HMM for at least 66% of the validation recordings).
- Mild Selection: The best input features combination comprises features with at least 33% relevance (that is, which have appeared in the features combination of the best-performing HMM for at least 33% of the validation recordings).
- Liberal Selection: The best input features combination comprises features counted at least once in the features combinations of the best-performing HMMs.

Second method for input features selection

While in the first method, the number of promising input features included in list L1 is limited at step S113 by using a filter, which makes it possible in subsequent step S121 to carry out an exhaustive search of feature combinations so as to generate the set S1, by contrast in the second method a Sequential Forward Search (SFS) is carried out.

Search methods for performing sequential forward search are disclosed for instance by Ref.[8].

Consequently, contrary to the first method, based on an initial list of input features such as list L0, an SFS method only generates a fraction of the possible candidate combinations.

Thanks to this feature, the filtering step S110 is bypassed in the second method, in which a broader search is carried out within a reasonable computing time directly on the basis of the input features of initial list L0.

The second method may comprise the following steps: Initialization - Creation of list L0 of all potential input features

First, at step 200 (as in step S100) a list L0 of all potential input features is established. In addition (as in step S130B), a set $S_\omega$ of possible values for weights $\omega_1$ and $\omega_2$ is defined. These values are determined so as to cover a range of weight settings, to map feature relevance for different accuracy and smoothness trade-offs. First values (that is, a first pair of values) for weights $\omega_1$ and $\omega_2$ are retrieved from the set $S_\omega$, and are deleted from that set. A first validation recording is selected.

Then, at step S210 the performance scores PS of different HMMs, and consequently the relevance counts of the associated input features combinations, are determined as follows.

At step S211, a list L1 of promising features is determined as follows. The list L1 is initially void.

At step S2111, a new feature Ci is retrieved from list L0 and is deleted from that list. A set S1 is generated, which comprises all the combinations which comprise one or more feature(s) of former list L1, and the newly retrieved feature Ci.

At step S2112, for each combination of set S1, a hidden Markov model HMM is trained.

At step S2113, the performance scores of the trained models HMM are calculated for all the models associated with the combinations of set S1, for the validation recording and for the values of the weights $\omega 1$ and $\omega_2$ considered during that iteration.

At step S2114, for the validation recording and for the values of the weights $\omega_1$ and $\omega_2$ considered during that iteration, the best-performing HMM is identified.

At step S2115, it is determined if the performance score of the best-performing HMM is better than (exceeds an improvement criterion over) the performance score of the best-performing HMM identified at the previous iteration of the algorithm (that is, the iteration performed with a previous version of set S1, whose features combinations did not comprise feature Ci).

If it is determined that the performance score of the best-performing HMM is indeed better than the performance score of the best-performing HMM of the previous iteration, it is concluded that adding the new feature Ci improves the performance of the list L1 of promising features; consequently, feature Ci is added to that list; the algorithm jumps back at step S2111, to determine if additional features should be added to that list.

Otherwise, it is concluded that no new features should be added to that list; the elements determined during the current iteration (the new set S1 of combinations including new feature Ci, the HMMs trained based on these combinations, the performance scores of these HMMs) are disregarded; and the algorithm continues at step S212. The version of list L1 which still does not include feature Ci is retained.

At step S212, for each input feature of the list L1 of promising input features, the number of times the input feature appears in the combinations associated with the identified best-performing models is counted, for the current validation recording, and for the current pair of values of weights $\omega_1$ and $\omega_2$. Note that this determination is based on the best-performing trained model identified at the step S2114 of the last iteration in which a new feature had been added to the list L1 of promising features, not on the best-performing model identified in the current iteration (the iteration in which the feature Ci was not added to list L1 because it does not improve the performances of the HMMs).

At step S213, it is considered whether all the validation recordings have been considered. If this is not the case, the algorithm jumps to step S214; otherwise, it continues at step S215.

At step S214, another validation recording is retrieved from the validation database, and is deleted from that database; the algorithm jumps back at step S211, so as to execute again step S210 based on the newly selected validation recording.

At step S215, it is considered whether all the possible values envisaged for weights $\omega_1$ and $\omega_2$ have been considered. If this is not the case, the algorithm jumps to step S216; otherwise, it continues at step S230.

At step S216, new values envisaged for weights $\omega_1$ and $\omega_2$ are retrieved from set $S_\omega$, and are deleted from that set; the algorithm jumps back at step S211, so as to execute again step S210 based on the new values of weights $\omega_1$ and $\omega_2$.

Finally, at step S230 preferable values for the weights and a best input features combination are determined by performing sub-steps S231 and S232.

These steps S231 and S232 are essentially identical to steps S151 and S152 described above.

In some embodiments, the first method when the second approach is used, and the second method, are combined.

That is, the steps preceding step S150 of the first method (second approach) are carried out, and the steps preceding step S230 of the second method are carried out.

Then, step S150 (or S230) is performed, but is performed specifically so as to take into account the relevance counts calculated during both the first method and the second method. In particular, the specific selection strategies mentioned in relation with step S152 can also be implemented at this stage in order to limit the number of features in the best input features combination.

By doing so, the global performance of the method can be improved.

Some results obtained while implementing the second approach of the first method are shown on Fig.7.

Fig.7 is a diagram showing a number of curves. Each curve plots the variations of the relevance count (in ordinate) versus the values of the weights $\omega_1$ and $\omega_2$ (in abscissa), for a considered input feature.

The weight values are expressed as percentages from 0 to 100%. For instance, a value '70/30' means that $\omega_1$ = 70% and $\omega_2$ = 30%.

In this embodiment, the number of validation recordings in the validation dataset is 42. For this reason, the maximum value of the relevance count is 42. A relevance count having this value, for a certain value of the weights, means that for this value of the weights, for all validation recordings, it has each time been determined at the successive steps S212 that the considered input feature is indeed included in the combination associated with the best-performing trained model considered at that step S212.

Fig.7 shows that when the weight values are selected very much in favour of the accuracy term (high value of $\omega_1$, on the left of Fig.7), many variables may have a higher relevance count than when the weight values are selected in favour of the smoothness term (on the right of Fig.7). However, selecting a very high value of the accuracy weight $\omega_1$ would lead to calculate driver torque values which would not be smooth, and therefore would not be actually very realistic, nor comfortable if implemented in an ADAS system.

For this reason, the choice was made of a value (in practice, 50%-50%) which appears as a pair of values for which a combination of input features which appear as quite relevant can be identified, and a satisfactory balance is achieved between the accuracy term and the smoothness term.

Number of states K determination process

While appropriately selecting the input features constituting vector F is an important aspect of the proposed approach, it is also important to choose properly the number of states of the HMM involved in the driver torque calculation methods proposed herein. Accordingly, there is also a need for methods to determine a number of states of the HMMs which are used in the driver torque calculation methods presented above, which makes it possible to implement these methods efficiently. Such a number of states is called hereafter an 'optimal number of states', denoted $K_{opt}$.

For this reason, methods to determine such optimal number of states $K_{opt}$ are proposed below. In these methods, it is supposed that the set of input features is fixed.

Specifically, two methods will be presented. In the first method, the optimal number of states $K_{opt}$ is determined by averaging performance scores of an HMM across all validation recordings.

By contrast in the second method, for each validation recording, a preferable number of states is determined. The optimal number of states $K_{opt}$ is then determined in a final phase based on the preferable number of states determined for the respective validation recordings.

First method for number of states determination

In the first method, the appropriate number of states may be determined by performing the following steps:

In an initialization step S300, the envisaged value K for the number of states is initiated to K=1.

Then, successive iterations are performed (in most cases) at step S310 in a loop.

At each iteration, the envisaged value K of the number of states is incremented.

Each time step S310 is executed, the performance of the envisaged value of the number of states is evaluated by performing the following steps S311-S314 and conditionally step S315.

At step S311, an HMM having specifically K states is trained: Its state transition distributions and its state emission distribution are identified.

Then, at step S312, the performance scores PS of that HMM are calculated for all the validation recordings.

Then, at step S313, an average value of the performance scores calculated at step S312 for all the validation recordings is determined.

At the first iteration, at step S314, the algorithm jumps directly to step S315.

In the subsequent iterations, at step S314 it is determined whether the calculated average performance score PS of the HMM having K states trained at step S311 is better than the average performance score PS of the HMM having K-1 states calculated at the past iteration. Accordingly, the calculated average performance score PS is used as global performance indicator, used to determine if a new iteration has to be performed in the loop.

The 'better performance score PS' in this step is defined using any suitable comparison criterion. For instance, the average performance score PS can be considered as being better only if it is more than 1% better than the former average performance score (that is, the average performance score determined at the previous iteration of step S310).

If it is the case, the algorithm jump to step S315, otherwise, the iterations are terminated, and the algorithm continues at step S320.

At step S315, the value of the envisaged value K is incremented (K=K+1); and the algorithm jumps back to step S311, to execute step S310 again with the incremented value of K.

At step S320, the optimal number $K_{opt}$ of states is determined as being the value of K obtained at the last but one iteration of the loop.

It should be noted that the above method can be implemented for various values of the weights $\omega_1$ and $\omega_2$.

In this case accordingly, a preferred 'per-weights' number of states $K_\omega$ will be obtained for each pair of values of the weights $\omega_1$ and $\omega_2$.

The final preferred value for the number of states can then be calculated based on all the preferred per-weights numbers of states $K_\omega$. It can be for instance as a rounded-off value of the average of all the preferred per-weights numbers of states $K_\omega$.

Second method for number of states determination

In the second method, the optimal number of states $K_{opt}$ may be determined by performing the following steps:

In an initialization step S400, the envisaged value K for the number of states is initiated to K=1. A first validation recording is selected.

Then, at step S410, several operations are iteratively performed in order to evaluate the performance of successive envisaged values K of the number of states. These iterations comprise two nested loops.

The inner loop is based on the envisaged value K of the number of states. At the first iteration, the loop is launched with the value of a single state (K=1); then, at each iteration, the envisaged value K of the number of states is incremented (K=K+1). This loop is repeated iteratively as long as increasing the number of states increases the performance of the trained HMM.

The outer loop is based on the validation recordings. The iterations of the inner loops are carried out successively for all validation recordings.

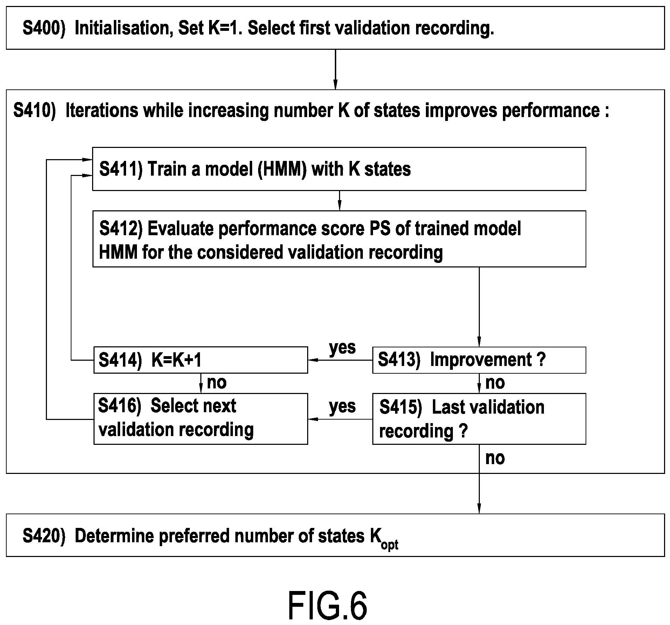

The detailed algorithm is as follows (Fig.6):

At step S411, an HMM having specifically K states is trained.

Then, at step S412, the performance score PS of that HMM for the considered validation recording is calculated.

At the first iteration, at step S413, the algorithm jumps directly to step S414.

In the subsequent iterations of the inner loop, at step S413 it is determined whether the HMM having K states trained at step S411, exhibits a better performance score than the HMM having K-1 states trained at step S411 of the past iteration. As for the first method, the 'better performance score' is possibly defined using a comparison criterion, for instance, 'more than 1% better than the former performance score'.

Accordingly in this method, the global performance indicator is the performance score of the trained HMM (as trained at step S411).

If it is the case (the currently tested value K of the number of states has better performances than the previously tested value K-1), the algorithm jumps to step S414; otherwise, the algorithm continues at step S415.

At step S414, the value of K is incremented, and the algorithm jumps back to step S411, so as to execute again step S410 based on the newly incremented value K of the number of states.

At step S415, it is checked whether at least one validation recording remains in the validation recordings database. If this is the case, the algorithm jumps to step S416; otherwise, the algorithm continues at step S417.

At step S416, another validation recording is retrieved from the validation database, and is deleted from that database; the algorithm jumps back at step S411, so as to execute again step S410 based on the newly selected validation recording.

At step S420, the optimal value $K_{opt}$ for the number of states is determined as follows.

For each outer loop which has been performed for a validation recording, a per-validation-recording optimal number of states $K_{opt,VR}$ for that validation recording is determined, which is the envisaged value K for the number of states reached at the last but one iteration.

Then, the preferred value $K_{opt}$ for the number of states is determined based on all the per-validation-recording preferred numbers of states $K_{opt,VR}$, for instance as the rounded-off value of the average of all the per-validation-recording preferred numbers of states $K_{opt,VR}$.

In addition, as for the first method, it should be noted that the above second method can be implemented for various values of the weights $\omega_1$ and $\omega_2$.

In this case accordingly, a preferred 'per-weights' number of states will be obtained for each pair of values of the weights $\omega_1$ and $\omega_2$.

The final preferred value for the number of states can then be calculated based on all the preferred per-weights and per-validation-recording numbers of states $K_{opt,\omega,VR}$, essentially by calculating an average value of these preferred numbers of states.

Those skilled in the art will recognize that the present invention may be manifested in a variety of forms other than the specific embodiments described and contemplated herein. Accordingly, departure in form and detail may be made without departing from the scope of the present invention as described in the appended claims.

**Claims**

1.  A computer-implemented driving variable calculation method for calculating at least one driving variable ($T^{est}_{d,t}$) related to a state of a driver-vehicle system during driving at a next time step (t+1);

    said at least one driving variable ($T^{est}_{d,t}$) not being the steering wheel angle; a hidden Markov Model (HMM) being defined by a number K of states ($s_k$), a matrix (A) of state transition probabilities and a set of K state emission distributions ($b_k$);
    each coefficient ($a_{ij}$) of the state transition probabilities matrix (A) defining a probability for a driver-vehicle system of transitioning from a first state ($s_i$) at a previous time step (t-1) to a second state ($s_j$) at a current time step (t);
    each state emission distribution ($b_k$) being a probability distribution for the driver-vehicle system of being in a state ($s_k$) and having a combined observation vector ($x_t$) at a current time step (t), the combined observation vector ($x_t$) combining values of input features (F) characterizing a situation of the vehicle at said current time step (t) and said at least one driving variable ($T^d_t$) at said current time step (t);
    the method comprising steps of:

    S10) inputting a vector of values of the input features (F) at the current time point;
    S20) based on said vector, calculating said at least one driving variable ($T_d$) at said next time step (t+1) as being equal to an expectation of a probability ($p(T_d|F)$) to obtain a certain value of said at least one driving variable ($T_d$) being given that the input features have said vector (F) of values, said probability being calculated based on the hidden Markov Model (HMM).

2.  The computer-implemented driver torque calculation method according to claim 1, wherein

    for each state ($s_k$), the state emission distribution ($b_k$) is supposed to be a single multivariate Gaussian;
    at step S20, said at least one driving variable ($T_d$) is calculated as a weighted sum over the states ($s_k$) of mean values $\overline{\mu}_{t,k}$ of the state emission distribution ($b_k$) for the respective states ($s_k$) at the considered timestep (t) multiplied by respective time- and state-dependent mixture weights ($a^F_{t,k}$).

3.  The computer-implemented driving variable calculation method according to claim 2, wherein each mean value $\overline{\mu}_{t,k}$ of one of said state emission distribution ($b_k$) is calculated as a function of a difference between said vector (F) of values and a mean ($\mu^{FF}_k$), for the considered state ($s_k$), of said at least one driving variable (F).

4.  The computer-implemented driving variable calculation method according to claim 2 or 3, wherein

    each mean value $\overline{\mu}_{t,k}$ of one of said state emission distribution ($b_k$) is calculated based on the equation:

$$\overline{\mu}_{t,k} = \mu^{FF}_k + \Sigma^{TF}_k \left(\Sigma^{FF}_k\right)^{-1} \left(F_t - \mu^{FF}_k\right)$$

    where $\mu^{FF}_k$ is a mean value of said at least one driving variable ($T_d$), $\Sigma^{FF}_k$ is a covariance matrix of the input features (F), and $\Sigma^{TF}_k$ is a covariance matrix of said at least one driving variable ($T_d$) relative to the input features (F).

5.  The computer-implemented driving variable calculation method according to any one of claims 2 to 4, wherein said mixture weights ($\alpha_{t,k}$) are calculated by implementing a forward procedure in which the first mixture weight ($\alpha_{1,k}$) for the first time step is calculated by an initial calculation for the first time step, and the other mixture weights ($\alpha_{t,k}$) for subsequent time steps are calculated successively, for each subsequent time step, based on the mixture weights ($\alpha_{t,k}$) already calculated for the previous time step(s).

6.  The computer-implemented driving variable calculation method according to any one of claims 1 to 5, wherein the matrix (A) of state transition probabilities and the set of state emission distribution ($b_k$) are determined by implementing an Expectation-Maximization algorithm, for instance the Baum-Welch algorithm.

7. A computer-implemented input features combination selection method for selecting a preferred input features combination (F) to be used as a vector of observations for Hidden Markov Models, denoted HMMs;

each hidden Markov Model being defined by a number K of states ($s_k$), a matrix (A) of state transition probabilities and a set of K state emission distributions ($b_k$);
each coefficient ($a_{ij}$) of the state transition probabilities matrix (A) defining a probability of transitioning from a first state ($s_i$) at a previous time step (t-1) to a second state ($s_j$) at a current time step (t);
each state emission distribution ($b_k$) being a probability distribution of being in a state ($s_k$) and having a combined observation vector ($x_t$) at a current time step (t), the combined observation vector ($x_t$) combining input values ($F_t$) characterizing a situation of the vehicle at said current time step (t) and at least one driving variable ($T^d_t$) at said current time step (t);
said at least one driving variable ($T^{est}_{d,t}$) being related to a state of a driver-vehicle system during driving at a next time step (t+1), but not being the steering wheel angle;
the method comprising:

- constituting a set (S1) of input feature combinations (F) (S121,S2111);
- for each combination within the set (S1) of input feature combinations:

. training a combination-specific HMM so as to identify the state transition probability matrix (A) and the state emission distributions ($b_k$) of the combination-specific HMM (S122,S2112);
. evaluating a performance of the trained combination-specific HMM for calculating predicted value(s) of said at least one driving variable ($T^d_t$) based on a performance score (PS) (S123,S141,S2113) using the driving variable calculation method according to any one of claims 1 to 6; and

- based on the evaluated performances of said trained HMMs, selecting the preferred input features combination (S130A,S152,S232).

8. The input features combination selection method according to claim 7, wherein the performance score (PS) includes an accuracy term ($A_{T,est}$) and a smoothness term ($SM_{T,est}$), the accuracy term being based on a distance between predicted value(s) and actual observed values of the at least on driving variable, and the smoothness term being based on differences between a derivative over time $\left(\dot{T}_{i,est}\right)$ of said at least one driving variable and a mean value $\left(\overline{\dot{T}_{est}}\right)$ of said derivative.

9. The input features combination selection method according to claim 7 or 8, comprising:

. establishing an initial list (L0) of input features (F) (S100); and
. filtering said initial list (L0) so as to determine a reduced list (L1) of promising input features (F) (S110); and
the set (S1) of input feature combinations is constituted based on said reduced list (L1).

10. The input features combination selection method according to claim 7 or 8, wherein

the method comprises iteratively determining a list (L1) of promising features by performing an iterative forward sequential search procedure; and
the step of selecting the preferred input features combination is based on the performances of the HMMs associated with the combinations derived from said list (L1) of promising features.

11. The input features combination selection method according to any one of claims 7 to 10, comprising:

among the trained HMMs, selecting best-performing trained HMM(s) (S142,S2114); and
calculating relevance counts of input features (S147,S212) based on the evaluated performances of said best-performing trained HMM(s), a relevance count being a number of times a considered input feature appears in the combinations associated with said best-performing trained HMM(s); and
the selected input features combination is selected based on the calculated relevance counts (S152,S232).

12. A computer-implemented number of states determination method for determining a preferred number ($K_{opt}$) of states of hidden Markov Model(s), denoted HMM(s);

   each hidden Markov Model being defined by a number K of states ($s_k$), a matrix (A) of state transition probabilities and a set of K state emission distributions ($b_k$);
   each coefficient ($a_{ij}$) of the state transition probabilities matrix (A) defining a probability of transitioning from a first state ($s_i$) at a previous time step (t-1) to a second state ($s_j$) at a current time step (t);
   each state emission distribution ($b_k$) being a probability distribution of being in a state ($s_k$) and having the combined observation vector ($x_t$) at time t, the combined observation vector ($x_t$) combining input values ($F_t$) characterizing a situation of the vehicle at said current time step (t) and at least one driving variable ($T^d_t$) at said current time step (t);
   said at least one driving variable ($T^{est}_{d,t}$) being related to a state of a driver-vehicle system during driving at a next time step (t+1), but not being the steering wheel angle;
   the method comprising:

   - for each value envisaged for the number of states among a plurality of possible values of the number of states, evaluating a performance for that envisaged value by, for at least one HMM for each state ($s_k$):

      . training said at least one HMM (S311,S411);
      . evaluating a performance (S312,S412) of the at least one trained HMM for calculating predicted value(s) of said at least one driving variable ($T^d_t$) based on a performance criterion (PS), using the driving variable calculation method according to any one of claims 1 to 6;

   - determining the preferred number of states ($K_{opt}$) based on the number of states of one or more HMMs exhibiting a best performance, among the trained HMMs (S322,S422).

13. The number of states determination method according to claim 12, wherein

   the performances for the multiple possible values for the number of states are evaluated by performing successive iterations in a loop, the value envisaged for the number of states being incremented at each iteration of the loop;
   at each iteration except the first one, it is evaluated whether a global performance indicator based on the performance of at least one of said at least one trained HMM is greater, vis-à-vis the predetermined improvement criterion, than the global performance indicator evaluated at a former iteration; and
   in the loop, a new iteration is initiated only if the global performance indicator has been evaluated as being greater vis-à-vis the predetermined improvement criterion than the global performance indicator evaluated at the former iteration.

14. One or more computer program(s) comprising instructions which, when the instructions are executed by a computer, cause the computer to carry out the steps of a method according to any one of claims 1 to 13.

15. A non-transitory computer readable medium, having the one or more computer program(s) according to claim 14 stored thereon.

16. A computer-implemented driving variable calculation system (DTCS) for calculating at least one driving variable ($T^{est}_{d,t}$) related to a state of a driver-vehicle system during driving at a next time step (t+1);

   the driving variable calculation system (DTCS) comprising one or more processors and a computer-readable medium;
   the computer-readable medium comprising computer instructions stored therein, wherein the instructions, when executed by the one or more processors, cause the one or more processors to carry out the steps of a driving variable calculation method according to any one of claims 1 to 6.

FIG.1

ADAS

CD

20

50

F

DTCS

$T^d$

FIG.2

S100) Initialization. Initial list L0 determination

S110) Determination of list L1 of promising features

> S111) Calculate feature correlations, per validation recording

> S112) Rank features over recordings, based on feature correlations

> S113) Determine list L1 of promising features

S120) Evaluation of performances of combinations based on list L1 of promising features

> S121) Generate set S1 of feature combinations based on list L1

> S122) Train a model (HMM) for each combination

> S123) Evaluate performance score PS of trained model HMM for all validation recordings

S130A) Determination of preferred combination of input features

# FIG.3A

S100) Initialization for filtering step S110

S110) Determination of list L1 of promising features

> S111) Calculate feature correlations, per validation recording

> S112) Rank features over recordings, based on feature correlations

> S113) Determine list L1 of best-performing features

S120) Evaluation of performances of combinations based on list L1 of promising features

> S121) Generate set S1 of feature combinations based on list L1

> S122) Train a model (HMM) for each combination

S130B) Initialization. Generate set $S_\omega$ of possible values of weights $\omega1$ and $\omega2$. Select first value for weights $\omega1$ and $\omega2$. Select first validation recording.

S140) Determination of relevance count of input features

> S141) Evaluate performance scores PS of the trained models HMM

> S142) Identify best-performing trained model HMM over set S1

> S144) Select next validation recording ← no — S143) Last validation recording

> S146) Select next possible values for weights $\omega1$ and $\omega2$ ← no — S145) Last possible value of weights $\omega1$ and $\omega2$ ?

> ↓ yes

> S147) Calculate relevance count of each input feature in the best-performing trained models HMM, over the validation recordings

S150) Determination of weights and feature combination

> S151) Determine preferred value for weights $\omega1$ and $\omega2$

> S152) Determine preferred input features combination

## FIG.3B

S200) Initialize search. Select first possible value for weights ω1 and ω2. Select first validation recording. Set relevance count to 0 for all features

S210) Determination of relevance count of a list L1 of promising features

S211) Determination of list L1 promising features

S2111) Select new feature Ci
Generate set S1 of all feature combinations comprising feature(s) of previous list L1 and new feature Ci

S2112) Train a model (HMM) for each combination of set S1

S2113) Evaluate performance score PS of trained model HMM

S2114) Identify best-performing trained model HMM over set S1

S2115) Improvement ?

S212) Calculate relevance count of each input feature of the list L1 of promising features, for the current validation recordings, for the current values of weights ω1 and ω2.

S214) Select next validation recordings

S213) Last validation recording?

S216) Select next possible values for weights ω1 and ω2

S215) Last possible value of weights ω1 and ω2?

S230) Determination of weights and feature combination

S231) Determination preferred value for weights ω1 and ω2

S232) Determine preferred input features combination

# FIG.4

S300) Initialisation, Set K=1.

S310) Iterations while increasing number K of states improves performance :

S311) Train a model (HMM) with K states

S312) Evaluate perfomance score PS of trained model HMM over all validation recordings

S313) Determine average performance of trained model on all validation recordings with new value of K

S315) K=K+1 ← yes ← S314) Improvement ?

no

S320) Determine preferred number of states $K_{opt}$

FIG.5

S400) Initialisation, Set K=1. Select first validation recording.

S410) Iterations while increasing number K of states improves performance :

S411) Train a model (HMM) with K states

S412) Evaluate performance score PS of trained model HMM for the considered validation recording

S414) K=K+1 ← yes — S413) Improvement ?

↓ no ↓ no

S416) Select next validation recording ← yes — S415) Last validation recording ?

no

S420) Determine preferred number of states $K_{opt}$

FIG.6

FIG.7

S10) Inputting values of input features (F) at current time point (t)

S20) Calculating said at least one driving variable ($T_d$) at said next time step (t+1), based on the hidden Markov Model (HMM)

FIG.8

Europäisches
Patentamt

European
Patent Office

Office européen
des brevets

# EUROPEAN SEARCH REPORT

Application Number

EP 22 17 4638

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | Lefèvre Stéphanie ET AL: "Lane Keeping Assistance with Learning-Based Driver Model and Model Predictive Control", , 20 September 2014 (2014-09-20), XP055977548, Retrieved from the Internet: URL:https://hal.inria.fr/hal-01104458/file /avec2014.pdf [retrieved on 2022-11-03] * abstract; figures 1,2 * * 1. Introduction * * 2. System overview * * 3. Driver model * ----- | 1-16 | INV. G06N7/00 G06N20/10 B60W30/00 |
| | | | TECHNICAL FIELDS SEARCHED (IPC) |
| | | | G06N B60W |

The present search report has been drawn up for all claims

| Place of search | Date of completion of the search | Examiner |
|---|---|---|
| The Hague | 4 November 2022 | De Meyer, Arnaud |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........................................................................
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. LEFÈVRE ; Y. GAO ; D. VASQUEZ ; H. TSENG ; R. BAJCSY ; F. BORRELLI.** Lane Keeping Assistance with Learning-Based Driver Model and Model Predictive Control. *12th International Symposium on Advanced Vehicle Control, (Tokyo, Japan),* 2014
- **ZHONGYI HU ; YUKUN BAO ; TAO XIONG ; RAYMOND CHIONG.** Hybrid filter-wrapper feature selection for short-term load forecasting. *Engineering Applications of Artificial Intelligence,* 2015, vol. 40, ISSN 0952-1976, 17-27
- **L. RABINER.** A tutorial on hidden markov models and selected applications in speech recognition. *Proceedings of the IEEE,* 1989, vol. 77 (2), 257-286
- **A. DEMPSTER ; N. LAIRD ; D. RUBIN.** Maximum Likelihood from Incomplete Data Via the EM Algorithm. *Journal of the Royal Statistical Society: Series B (Methodological),* 1977, vol. 39 (1), 1-22
- Latent Gaussian Mixture Regression for Human Pose Estimation. **Y. TIAN ; L. SIGAL ; H. BADINO ; F. DE LA TORRE ; Y. LIU.** Computer Vision - ACCV 2010. Springer, 2011, 679-690

- **S.CALINON ; F. D'HALLUIN ; E. SAUSER ; D. CALDWELL ; A. BILLARD.** Learning and reproduction of gestures by imitation. *IEEE Robotics Automation Magazine,* 2010, vol. 17 (2), 44-54
- Utilization of a hidden-markov-model for the prediction of lane change maneuvers. **F. FALLER.** PhD thesis, Master's thesis. TU Darmstadt, Knowledge Engineering Group, 2016
- **M. LIWICKI ; H. BUNKE.** Feature selection for hmm and blstm based handwriting recognition of whiteboard notes. *International Journal of Pattern Recognition and Artificial Intelligence,* 2009, vol. 23 (05), 907-923
- **A. JOVIC ; K. BRKIC ; N. BOGUNOVIC.** A review of feature selection methods with applications. *2015 38th International Convention on Information and Communication Technology, Electronics and Microelectronics (MIPRO),* 2015, 1200-1205
- **Z. GHAHRAMANI ; M.I. JORDAN.** Supervised learning from incomplete data via an EM approach. *Advances in neural information processing systems,* 1994, 120-127